# EUROPEAN PATENT APPLICATION

(11) **EP 4 851 513 A1**
(43) Date of publication of application: **09.12.2026**
(21) Application number: 25181416.6
(22) Date of filing: 06.06.2025
(51) Int. Cl.: F16L 33/01, F16L 33/207, F16L 11/115

(54) **FLEXIBLE PIPE FOR GARDEN USE**

(71) Applicant: Zhejiang Tianti Rubber & Plastic Technology Co., Ltd., Taizhou, Zhejiang 317200 (CN)
(72) Inventor: DAI, WEIQIANG, Zhejiang, 317200 (CN)
(74) Representative: Lang, Christian

(57) **Abstract**

A flexible pipe (1) for garden use includes an inner pipe (10), a braided layer (20) and two connecting assemblies (30). The inner pipe (10) defines an axial direction (A) and includes a plurality of annular concave portions (11) and a plurality of annular convex portions (12) alternatively arranged along the axial direction (A). The braided layer (20) is sleeved around the inner pipe (10). The two connecting assemblies (30) are disposed on two ends of the flexible pipe (1) for garden use, and each of the two connecting assemblies (30) includes an insertion member (31, 31a) disposed within an end of the inner pipe (10) and a sleeve member (32) sleeved around an outer surface of the braided layer (20).

## Description

### BACKGROUND OF THE INVENTION

### Field of the Invention

The present invention relates to a flexible pipe for garden use.

### Description of the Prior Art

Conventional flexible pipes typically employ a pipe body with an outer braided layer to enhance pressure resistance, and both ends are connected via connector assemblies. However, in traditional designs, the connection between the pipe body and the connector is often achieved merely through insertion fit or adhesive bonding, which tends to loosen or leak due to changes in water pressure or bending stress. In particular, if the outer braided layer is not properly secured to the connector structure, it cannot provide sufficient tensile strength and may become worn by friction at the edge of the sleeve, further compromising the structural stability of the hose. Moreover, the connection stability between traditional connectors and pipe bodies is often poor, causing the two components to detach under pressure-induced deformation after assembly. This results in an inability to maintain long-term sealing and secure connection, ultimately reducing the service life and safety of the hose.

The present invention is, therefore, arisen to obviate or at least mitigate the above-mentioned disadvantages.

### SUMMARY OF THE INVENTION

The main object of the present invention is to provide a flexible pipe for garden use, which has good pressure resistance and is durable to use.

To achieve the above and other objects, the present invention provides a flexible pipe for garden use, including: an inner pipe, a braided layer and two connecting assemblies. The inner pipe defines an axial direction and includes a plurality of annular concave portions and a plurality of annular convex portions alternatively arranged along the axial direction. The braided layer is sleeved around the inner pipe. The two connecting assemblies are disposed on two ends of the flexible pipe for garden use, and each of the two connecting assemblies includes an insertion member disposed within an end of the inner pipe and a sleeve member sleeved around an outer surface of the braided layer. An outer periphery surface of each said insertion member includes a plurality of annular projections spacedly arranged along the axial direction. The inner pipe and the braided layer are radially clamped between the insertion member and the sleeve member of each of the two connecting assemblies, and the braided layer is partially pressed and embedded into the plurality of annular concave portions. The plurality of annular concave portions are partially engaged within adjacent two of the plurality of annular projections, and the plurality of annular convex portions partially correspond to the plurality of annular projections. A height difference between one of the plurality of annular concave portions and one of the plurality of annular convex portions which are located between one said insertion member and one said sleeve member is smaller than a height difference between one of the plurality of annular concave portions and one of the plurality of annular convex portions which are located out of the two connecting assemblies.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a preferable embodiment of the present invention;
Fig. 2 is a breakdown drawing of a preferable embodiment of the present invention;
Fig. 3 is a partial breakdown drawing of a preferable embodiment of the present invention when a sleeve member is crimped;
Fig. 4 is a partial cross sectional view of a preferable embodiment of the present invention;
Fig. 5 is an enlargement of the area A in Fig. 4; and
Fig. 6 is an enlargement of the area B in Fig. 4.

### DETAILED DESCRIPTION OF THE PREFERRED EMBODIMENTS

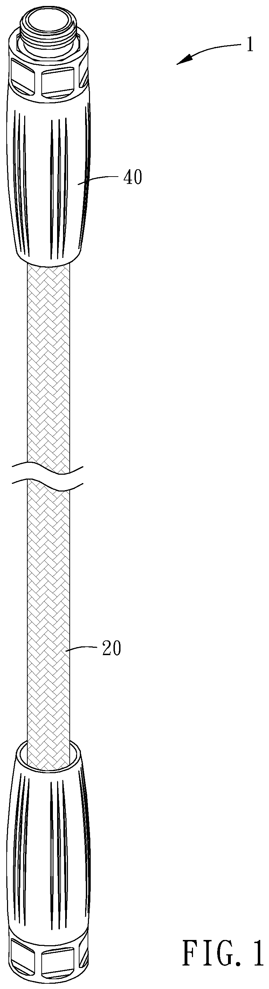

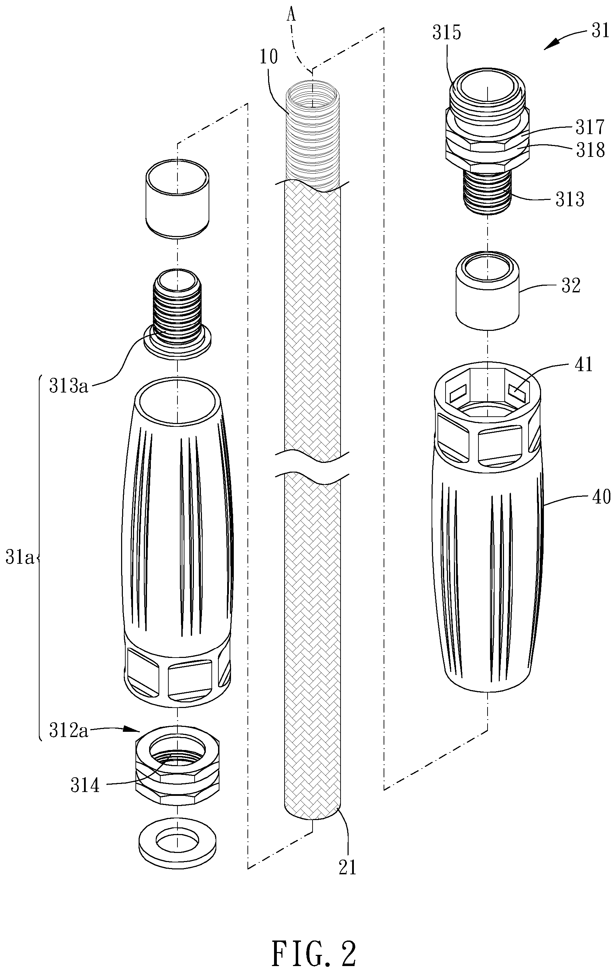

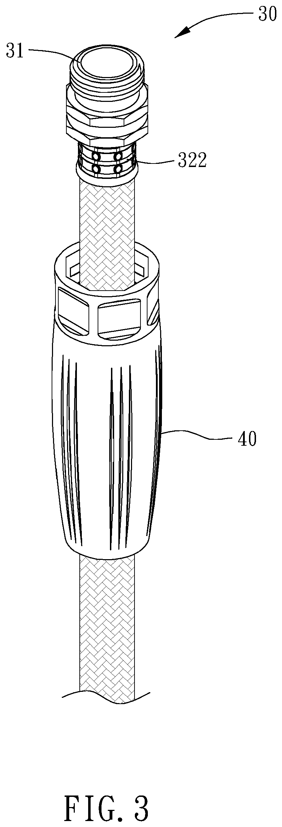

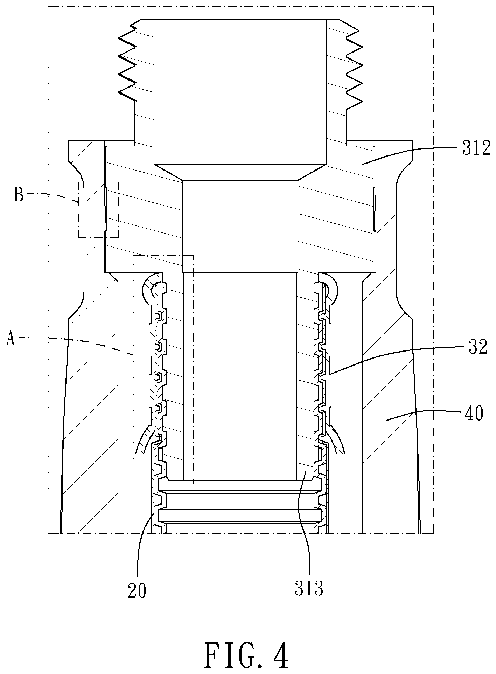

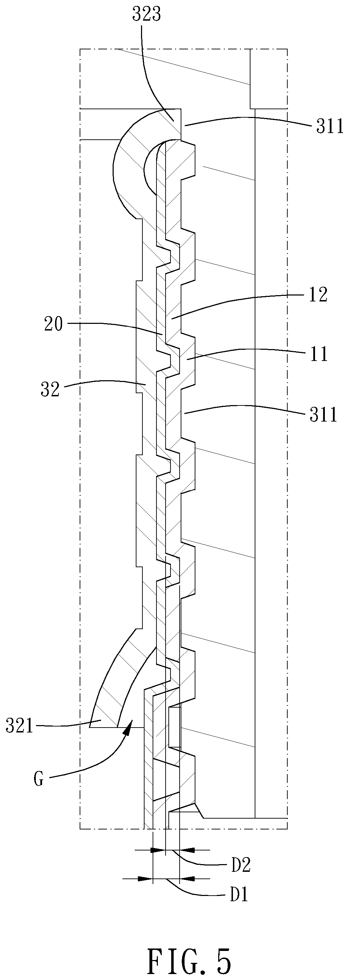

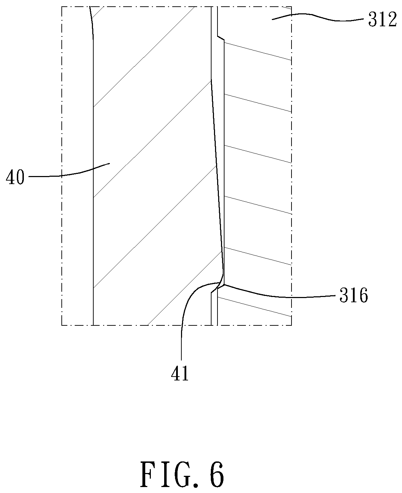

Please refer to Figs. 1 to 6 for a preferable embodiment of the present invention. A flexible pipe 1 for garden use of the present invention includes an inner pipe 10, a braided layer 20 and two connecting assemblies 30.

The inner pipe 10 defines an axial direction A and includes a plurality of annular concave portions 11 and a plurality of annular convex portions 12 alternatively arranged along the axial direction A. The braided layer 20 is sleeved around the inner pipe 10. The two connecting assemblies 30 are disposed on two ends of the flexible pipe 1 for garden use, and each of the two connecting assemblies 30 includes an insertion member 31, 31a disposed within an end of the inner pipe 10 and a sleeve member 32 sleeved around an outer surface of the braided layer 20. An outer periphery surface of each said insertion member 31, 31a includes a plurality of annular projections 311 spacedly arranged along the axial direction A. The inner pipe 10 and the braided layer 20 are radially clamped between the insertion member 31, 31a and the sleeve member 32 of each of the two connecting assemblies 30, and the braided layer 20 is partially pressed and embedded into the plurality of annular concave portions 11. The plurality of annular concave portions 11 are partially engaged within adjacent two of the plurality of annular projections 311, and the plurality of annular convex portions 12 partially correspond to the plurality of annular projections 311, which increases frictional resistance and stabilizes the multi-layered joint under dynamic water flow conditions.

A height difference D2 between one of the plurality of annular concave portions 11 and one of the plurality of annular convex portions 12 which are located between one said insertion member 31, 31a and one said sleeve member 32 is smaller than a height difference D1 between one of the plurality of annular concave portions 11 and one of the plurality of annular convex portions 12 which are located out of the two connecting assemblies 30. The inner pipe 10 is appropriately deformed to provide sealing effect and increase assembling stability.

Preferably, the inner pipe 10 is made of polyethylene and is translucent, which provides a range of working temperature between -40°C and 90°C so that the inner pipe 10 has preferable resistance to high and low temperatures.

Specifically, the braided layer 20 includes a plurality of braiding yarns 21, and each of the plurality of braiding yarns 21 includes a plurality of fibers made of at least one of polyester (preferable), nylon, polypropylene, polyvinyl chloride or rubber so as to provide sufficient structural strength, anti-cut effect and aging resistance. In this embodiment, each of the plurality of braiding yarns 21 includes five said fibers arranged side by side, and each of the plurality of fibers is a monofilament with a diameter between 0.2 mm and 0.3 mm, which has preferable structural strength. In manufacturing, the braided layer 20 may be made by a braiding machine with 48 carriers so as to provide expected diametrical dimension of the braided layer 20 to urge the inner pipe 10. In other embodiments, the number of said fibers of each of the plurality of braiding yarns may be changed to meet different requirements; the number of the carriers of the braiding machine may be changed to meet different requirements; the plurality of fibers of each of the plurality of braiding yarns may be made of at least two kinds of different materials.

Moreover, a hardness of the inner pipe 10 is larger than a hardness of the braided layer 20. Therefore, when the inner pipe 10 and the braided layer 20 are crimped between said insertion members 31, 31a and said sleeve members 32, the braided layer 20 can be embedded within the plurality of annular concave portions 11 without over-deformation of the inner pipe 10. This allows the inner pipe 10 to support the braided layer 20 and prevent collapse during bending or compression. According to a burst test, a maximum hydraulic pressure of the flexible pipe 1 for garden use is about 2900 psi.

Each said insertion member 31, 31a includes a head portion 312, 312a and an insertion portion 313, 313a connected with the head portion 312, 312a. The plurality of annular projections 311 are integrally formed on the insertion portion 313, 313a, and a length of each said sleeve member 32 is shorter than a length of one said insertion portion 313, 313a. Therefore, each said insertion portion 313, 313a is long enough to support the inner pipe 10 when one said sleeve member 32 is crimped, which provides sufficient engaging stability and avoids damage to the inner pipe 10. An end of each said sleeve member 32 has an enlarged section 321, an inner diametrical dimension of the enlarged section 321 is gradually increased, and the enlarged section 321 and the braided layer 20 define an annular gap G therebetween. The annular gap G allows the inner pipe 10 and the braided layer 20 to move and deform within the annular gap G and prevents the braided layer 20 from being abraded by edges of said sleeve members 32.

In this embodiment, the head portion 312a of one said insertion member 31a has an inner threaded portion 314 and is sleeved with one said insertion portion 313a, and the head portion 312 of the other said insertion member 31 has an outer threaded portion 315 and is integrally formed as one piece with one said insertion portion 313. The two connecting assemblies 30 are made of stainless steel, aluminum or copper so as to have good pressure resistance. In other embodiments, both of said connecting members of the two connectors may have said inner threaded portions or said outer threaded portions to meet different requirements.

A distance between adjacent two of the plurality of annular convex portions 12 is different from a distance between adjacent two of the plurality of annular projections 311, enhancing mechanical interlock and prevents axial slippage between layers. Diametrical dimensions of the plurality of annular projections 311 are identical, ensuring even load distribution and consistent deformation when crimped.

An outer periphery surface of each said sleeve member 32 is crimped to deform and form a plurality of recesses 322 spacedly arranged in the axial direction A, and an inner periphery surface of each said sleeve member 32 is deformed and fitted with the outer surface of the braided layer 20, ensuring tight, leak-free fitting with enhanced mechanical grip. An end of each said sleeve member 32 has a flange 323 extending radially inward, and the flange 323 is radially abutted against one of the plurality of annular projections 311 and axially abutted against an end of the inner pipe 10 which is engaged within adjacent two of the plurality of annular projections 31, provides dual-directional constraint to avoid loosening and axial displacement.

The flexible pipe 1 for garden use further includes two grip covers 40 sleeved to the braided layer 20 and the two connecting assemblies 30. An outer surface of each said head portion 312, 312a has a first engaging portion 316, and an inner surface of each of the two grip covers 40 has a second engaging portion 41 engaged with one said first engaging portion 316 in the axial direction A for easy assembling. The inner surface of each of the two grip covers 40 has a polygonal profile, and the outer surface of each said head portion 312, 312a includes two polygonal surfaces 317 and an annular surface 318 located between the two polygonal surfaces 317. The two polygonal surfaces 317 radially protrude beyond the annular surface 318 and define one said first engaging portion 316 therebetween, which is easy to process and prevents rotation between the two grip covers 40 and said head portions 312, 312a. Each of the two grip covers 40 is spaced apart from and entirely covers one said sleeve member 32 so as to protect said sleeve members 32 from external damage and enhances the overall aesthetic.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A flexible pipe (1) for garden use, including:
an inner pipe (10), defining an axial direction (A), including a plurality of annular concave portions (11) and a plurality of annular convex portions (12) alternatively arranged along the axial direction (A);
a braided layer (20), sleeved around the inner pipe (10); and
two connecting assemblies (30), disposed on two ends of the flexible pipe (1) for garden use, each of the two connecting assemblies (30) including an insertion member (31, 31a) disposed within an end of the inner pipe (10) and a sleeve member (32) sleeved around an outer surface of the braided layer (20), an outer periphery surface of each said insertion member (31, 31a) including a plurality of annular projections (311) spacedly arranged along the axial direction (A);
wherein the inner pipe (10) and the braided layer (20) are radially clamped between the insertion member (31, 31a) and the sleeve member (32) of each of the two connecting assemblies (30), the braided layer (20) is partially pressed and embedded into the plurality of annular concave portions (11), the plurality of annular concave portions (11) are partially engaged within adjacent two of the plurality of annular projections (311), and the plurality of annular convex portions (12) partially correspond to the plurality of annular projections (311);
wherein a height difference (D2) between one of the plurality of annular concave portions (11) and one of the plurality of annular convex portions (12) which are located between one said insertion member (31, 31a) and one said sleeve member (32) is smaller than a height difference (D1) between one of the plurality of annular concave portions (11) and one of the plurality of annular convex portions (12) which are located out of the two connecting assemblies (30).

2. The flexible pipe (1) for garden use of claim 1, wherein the inner pipe (10) is made of polyethylene and is translucent.

3. The flexible pipe (1) for garden use of claim 1, wherein each said insertion member (31, 31a) includes a head portion (312, 312a) and an insertion portion (313, 313a) connected with the head portion (312, 312a), the plurality of annular projections (311) are integrally formed on the insertion portion (313, 313a), and a length of each said sleeve member (32) is shorter than a length of one said insertion portion (313, 313a).

4. The flexible pipe for garden use (1) of claim 1, wherein a distance between adjacent two of the plurality of annular convex portions (12) is different from a distance between adjacent two of the plurality of annular projections (311).

5. The flexible pipe (1) for garden use of claim 1, wherein an end of each said sleeve member (32) has a flange (323) extending radially inward, and the flange (323) is radially abutted against one of the plurality of annular projections (311) and axially abutted against an end of the inner pipe (10) which is engaged within adjacent two of the plurality of annular projections (311).

6. The flexible pipe (1) for garden use of claim 1, wherein an end of each said sleeve member (32) has an enlarged section (321), an inner diametrical dimension of the enlarged section (321) is gradually increased, and the enlarged section (321) and the braided layer (20) define an annular gap (G) therebetween.

7. The flexible pipe (1) for garden use of claim 1, wherein an outer periphery surface of each said sleeve member (32) is crimped to deform and form a plurality of recesses (322) spacedly arranged in the axial direction (A), and an inner periphery surface of each said sleeve member (32) is deformed and fitted with the outer surface of the braided layer (20).

8. The flexible pipe (1) for garden use of claim 1, further including two grip covers (40) sleeved to the braided layer (20) and the two connecting assemblies (30), wherein each said insertion member (31, 31a) includes a head portion (312, 312a), an outer surface of each said head portion (312, 312a) has a first engaging portion (316), and an inner surface of each of the two grip covers (40) has a second engaging portion (41) engaged with one said first engaging portion (316) in the axial direction (A).

9. The flexible pipe (1) for garden use of claim 8, wherein the inner surface of each of the two grip covers (40) has a polygonal profile, the outer surface of each said head portion (312, 312a) includes two polygonal surfaces (317) and an annular surface (318) located between the two polygonal surfaces (317), and the two polygonal surfaces (317) radially protrude beyond the annular surface (318) and define one said first engaging portion (316) therebetween.

10. The flexible pipe (1) for garden use of claim 9, wherein the inner pipe (10) is made of polyethylene and is translucent; the braided layer (20) includes a plurality of braiding yarns (21), and each of the plurality of braiding yarns (21) includes a plurality of fibers made of at least one of polyester, nylon, polypropylene, polyvinyl chloride or rubber; each of the plurality of fibers is a monofilament with a diameter between 0.2 mm and 0.3 mm; each of the plurality of braiding yarns (21) includes five said fibers arranged side by side; the braided layer (20) is made by a braiding machine with 48 carriers; a hardness of the inner pipe (10) is larger than a hardness of the braided layer (20); the two connecting assemblies (30) are made of stainless steel, aluminum or copper; each said insertion member (31, 31a) further includes an insertion portion (313, 313a) connected with the head portion (312, 312a), the plurality of annular projections (311) are integrally formed on the insertion portion (313, 313a), and a length of each said sleeve member (32) is shorter than a length of one said insertion portion (313, 313a); diametrical dimensions of the plurality of annular projections (311) are identical; a distance between adjacent two of the plurality of annular convex portions (12) is different from a distance between adjacent two of the plurality of annular projections (311); an end of each said sleeve member (32) has a flange (323) extending radially inward, and the flange (323) is radially abutted against one of the plurality of annular projections (311) and axially abutted against an end of the inner pipe (10) which is engaged within adjacent two of the plurality of annular projections (311); an end of each said sleeve member (32) has an enlarged section (321), an inner diametrical dimension of the enlarged section (321) is gradually increased, and the enlarged section (321) and the braided layer (20) define an annular gap (G) therebetween; an outer periphery surface of each said sleeve member (32) is crimped to deform and form a plurality of recesses (322) spacedly arranged in the axial direction (A), and an inner periphery surface of each said sleeve member (32) is deformed and fitted with the outer surface of the braided layer (20); and each of the two grip covers (40) is spaced apart from and entirely covers one said sleeve member (32).

## Amended claims

### Amended claims in accordance with Rule 137(2) EPC.

1. A flexible pipe (1) for garden use, including:
an inner pipe (10), defining an axial direction (A), including a plurality of annular concave portions (11) and a plurality of annular convex portions (12) alternatively arranged along the axial direction (A);
a braided layer (20), sleeved around the inner pipe (10); and
two connecting assemblies (30), disposed on two ends of the flexible pipe (1) for garden use, each of the two connecting assemblies (30) including an insertion member (31, 31a) disposed within an end of the inner pipe (10) and a sleeve member (32) sleeved around an outer surface of the braided layer (20), an outer periphery surface of each said insertion member (31, 31a) including a plurality of annular projections (311) spacedly arranged along the axial direction (A);
wherein the inner pipe (10) and the braided layer (20) are radially clamped between the insertion member (31, 31a) and the sleeve member (32) of each of the two connecting assemblies (30), the braided layer (20) is partially pressed and embedded into the plurality of annular concave portions (11), the plurality of annular concave portions (11) are partially engaged within adjacent two of the plurality of annular projections (311), and the plurality of annular convex portions (12) partially correspond to the plurality of annular projections (311);
wherein a height difference (D2) between one of the plurality of annular concave portions (11) and one of the plurality of annular convex portions (12) which are located between one said insertion member (31, 31a) and one said sleeve member (32) is smaller than a height difference (D1) between one of the plurality of annular concave portions (11) and one of the plurality of annular convex portions (12) which are located out of the two connecting assemblies (30);
**characterized in that**
the flexible pipe (1) further includes two grip covers (40) sleeved to the braided layer (20) and the two connecting assemblies (30), wherein each said insertion member (31, 31a) includes a head portion (312, 312a), an outer surface of each said head portion (312, 312a) has a first engaging portion (316), and an inner surface of each of the two grip covers (40) has a second engaging portion (41) engaged with one said first engaging portion (316) in the axial direction (A),
wherein the inner surface of each of the two grip covers (40) has a polygonal profile, the outer surface of each said head portion (312, 312a) includes two polygonal surfaces (317) and an annular surface (318) located between the two polygonal surfaces (317), and the two polygonal surfaces (317) radially protrude beyond the annular surface (318) and define one said first engaging portion (316) therebetween.

2. The flexible pipe (1) of claim 1, wherein the inner pipe (10) is made of polyethylene and is translucent.

3. The flexible pipe (1) of claim 1, wherein each said insertion member (31, 31a) includes the head portion (312, 312a) and an insertion portion (313, 313a) connected with the head portion (312, 312a), the plurality of annular projections (311) are integrally formed on the insertion portion (313, 313a), and a length of each said sleeve member (32) is shorter than a length of one said insertion portion (313, 313a).

4. The flexible pipe (1) of claim 1, wherein a distance between adjacent two of the plurality of annular convex portions (12) is different from a distance between adjacent two of the plurality of annular projections (311).

5. The flexible pipe (1) of claim 1, wherein an end of each said sleeve member (32) has a flange (323) extending radially inward, and the flange (323) is radially abutted against one of the plurality of annular projections (311) and axially abutted against an end of the inner pipe (10) which is engaged within adjacent two of the plurality of annular projections (311).

6. The flexible pipe (1) of claim 1, wherein an end of each said sleeve member (32) has an enlarged section (321), an inner diametrical dimension of the enlarged section (321) is gradually increased, and the enlarged section (321) and the braided layer (20) define an annular gap (G) therebetween.

7. The flexible pipe (1) of claim 1, wherein an outer periphery surface of each said sleeve member (32) is crimped to deform and form a plurality of recesses (322) spacedly arranged in the axial direction (A), and an inner periphery surface of each said sleeve member (32) is deformed and fitted with the outer surface of the braided layer (20).

8. The flexible pipe (1) of claim 1, wherein the inner pipe (10) is made of polyethylene and is translucent; the braided layer (20) includes a plurality of braiding yarns (21), and each of the plurality of braiding yarns (21) includes a plurality of fibers made of at least one of polyester, nylon, polypropylene, polyvinyl chloride or rubber; each of the plurality of fibers is a monofilament with a diameter between 0.2 mm and 0.3 mm; each of the plurality of braiding yarns (21) includes five said fibers arranged side by side; the braided layer (20) is made by a braiding machine with 48 carriers; a hardness of the inner pipe (10) is larger than a hardness of the braided layer (20); the two connecting assemblies (30) are made of stainless steel, aluminum or copper; each said insertion member (31, 31a) further includes an insertion portion (313, 313a) connected with the head portion (312, 312a), the plurality of annular projections (311) are integrally formed on the insertion portion (313, 313a), and a length of each said sleeve member (32) is shorter than a length of one said insertion portion (313, 313a); diametrical dimensions of the plurality of annular projections (311) are identical; a distance between adjacent two of the plurality of annular convex portions (12) is different from a distance between adjacent two of the plurality of annular projections (311); an end of each said sleeve member (32) has a flange (323) extending radially inward, and the flange (323) is radially abutted against one of the plurality of annular projections (311) and axially abutted against an end of the inner pipe (10) which is engaged within adjacent two of the plurality of annular projections (311); an end of each said sleeve member (32) has an enlarged section (321), an inner diametrical dimension of the enlarged section (321) is gradually increased, and the enlarged section (321) and the braided layer (20) define an annular gap (G) therebetween; an outer periphery surface of each said sleeve member (32) is crimped to deform and form a plurality of recesses (322) spacedly arranged in the axial direction (A), and an inner periphery surface of each said sleeve member (32) is deformed and fitted with the outer surface of the braided layer (20); and each of the two grip covers (40) is spaced apart from and entirely covers one said sleeve member (32).
